# EUROPÄISCHE PATENTANMELDUNG

(11) **EP 3 719 466 A1**
(43) Veröffentlichungstag der Anmeldung: **07.10.2020**
(21) Anmeldenummer: 19166472.1
(22) Anmeldetag: 01.04.2019
(51) Int. Cl.: G01K 7/18, B23K 20/00, H01L 23/00, B33Y 10/00, B23K 26/22, B23K 26/244

(54) **3D-VERBINDERSTRUKTUR, VERFAHREN ZUR HERSTELLUNG EINER 3D-VERBINDERSTRUKTUR UND TEMPERATURSENSOR**

(71) Anmelder: Heraeus Nexensos GmbH, 63450 Hanau (DE)
(72) Erfinder: MUZIOL, Matthias, 63533 Mainhausen (DE); BLEIFUß, Martin, 63796 Kahl (DE); WIENAND, Karlheinz, 63741 Aschaffenburg (DE); FISCHER, Jakob, 64380 Roßdorf (DE); BEYTULLAH YASIN, Kilic, 63450 Hanau (DE)
(74) Vertreter: Kilchert, Jochen

(57) **Zusammenfassung**

Die Erfindung betrifft eine 3D-Verbinderstruktur 10 zur elektrischen Verbindung mindestens einer flächigen Elektrode 15 mit mindestens einem Anschlussdraht 16. Erfindungsgemäß weist die 3D-Verbinderstruktur 10 mindestens zwei räumlich voneinander getrennte Verbinder 20 auf, wobei die Verbinder 20 jeweils ein elektrisch leitfähiges Material, eine erste Seite 21 und eine zweite Seite 22 aufweisen, wobei die zweite Seite 22 eines jeden Verbinders 20 mit einem elektrischen Anschlusselement 30 verbunden oder verbindbar ist, wobei zwischen der ersten Seite 21 und der zweiten Seite 22 eines jeden Verbinders 20 ein Abstand A von mindestens 100 µm, insbesondere von mindestens 200 µm, insbesondere von mindestens 300 µm, ausgebildet ist.

## Beschreibung

Die Erfindung bezieht sich auf eine 3D-Verbinderstruktur zur elektrischen Verbindung mindestens einer flächigen Elektrode mit mindestens einem Anschlussdraht. Des Weiteren betrifft die Erfindung ein Verfahren zur Herstellung einer 3D-Verbinderstruktur sowie einen Temperatursensor, der eine 3D-Verbinderstruktur aufweist.

Aus dem Stand der Technik ist es bekannt, eine elektrische Verbindung zwischen einem Anschlusspad einer platinbasierten Sensorstruktur und einer Anschlussleitung mittels bekannter Bondverfahren, wie Thermokompression oder Ultraschall, herzustellen. In DE 26 15 473 A1 wird beispielsweise eine derartige Verbindung offenbart.

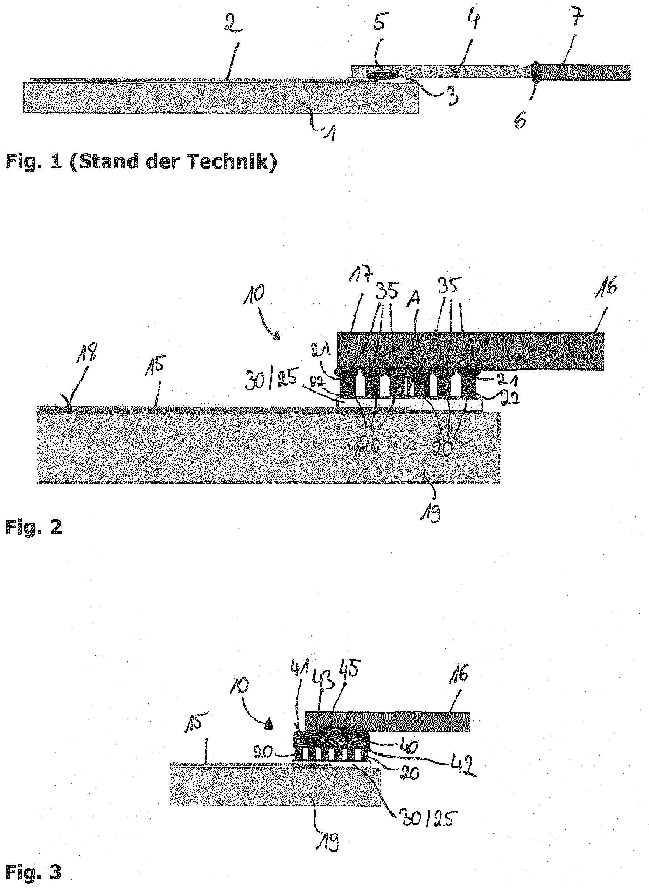

Wie in Fig. 1 schematisch dargestellt, ist auf einem Keramiksubstrat 1 auf dessen oberer Seite eine Platindünnschichtstruktur 2 aufgebracht. Die Platindünnschichtstruktur 2 ist mäanderförmig ausgestaltet und weist an den Enden zwei Elektroden auf. Die Elektroden weisen beispielsweise Perforationslöcher auf. Die Elektroden sind zumindest abschnittsweise mit einer Siebdruckpaste 3 beschichtet. Die Siebdruckpaste 3 enthält neben Edelmetall auch Glasfritte, um eine gute Verbindung der Paste mit dem durch die Perforationslöcher offenliegenden Keramiksubstrat 1 und der Platindünnschichtstruktur 2 zu ermöglichen. Das derart aufgebaute Elektrodenpad kann auch aus mehr als einer Siebdruckschicht bestehen.

Nach dem Einbrennen der Siebdruckpaste 3 wird ein edelmetallhaltiger Anschlussdraht 4 auf die eingebrannte Siebdruckpaste 3 geschweißt. Diesbezüglich ist der Schweißpunkt 5 dargestellt. Ein bekanntes Schweißverfahren ist diesbezüglich das Spaltschweißen. In diesem Fall wird eine Doppelelektrode auf den Anschlussdraht 4 gepresst und eine elektrische Spannung angelegt. Der Strom, der durch den Anschlussdraht 4 und die darunter befindliche Siebdruckpaste 3 fließt, schmilzt den Verbund an der Kontaktstelle zwischen der Siebdruckpaste 3 bzw. dem hergestellten Elektrodenpad und dem Anschlussdraht 4 auf. Es entsteht eine feste metallische Verbindung.

Aufgrund der Ähnlichkeit der verwendeten Edelmetalle in der Siebdruckpaste 3 sowie im Anschlussdraht 4 sind die thermischen Ausdehnungskoeffizienten beider Komponenten ebenfalls sehr ähnlich. Die Verbindung zwischen dem hergestellten Elektrodenpad und dem Anschlussdraht 4 ist entsprechend stabil, auch bei starken Temperaturschwankungen, wie diese beispielsweise im Abgasstrang eines Verbrennungsmotors vorherrschen.

Der dargestellte Anschlussdraht 4, der vorzugsweise aus Platin gebildet ist, kann eine Drahtverlängerung aufweisen. Hierzu ist an den Anschlussdraht 4 mittels eines weiteren Schweißpunktes 6 eine Drahtverlängerung 7 angebracht. Diese Drahtverlängerung 7 kann beispielsweise aus einer Nickellegierung gefertigt sein.

Ein Nachteil dieses bekannten Aufbaus eines Temperatursensors und der damit verbundenen Herstellung ist insbesondere im dazu notwendigen Materialanteil von Edelmetallen im Gesamtaufbau zu sehen. Der Anteil an Edelmetall in der Siebdruckpaste 3 sowie im Anschlussdraht 4 ist äußerst hoch. Die hohen Kosten des Edelmetalls bestimmen wesentlich die Gesamtkosten eines herzustellenden Temperatursensors. Es ist daher notwendig, nach Lösungen zu suchen, um die Materialkosten für die elektrische Verbindung zwischen einer flächigen Elektrode und einem Anschlussdraht zu reduzieren.

Es sind zwar Lösungen bekannt, wonach ein Edelmetall-Anschlussdraht, beispielsweise ein Platin-Anschlussdraht, durch einen mit Platin beschichteten NiCr-Draht ersetzt wird. Allerdings ist die Herstellung derartiger Drähte äußerst komplex, so dass diesbezüglich keine Kosteneinsparung hinsichtlich des herzustellenden Temperatursensors erreicht wird.

Ausgehend von dem Vorgenannten, ist es Aufgabe der vorliegenden Erfindung, eine Verbinderstruktur zur elektrischen Verbindung mindestens einer flächigen Elektrode mit mindestens einem Anschlussdraht anzugeben, die zum einen den Anforderungen in hohen Temperaturumgebungen, beispielsweise einer Umgebung eines Abgasstranges, genügt und zum anderen hinsichtlich der Edelmetallanteile verbessert ist. Die Edelmetall-Anteile im Zusammenhang mit einer erfindungsgemäßen Verbinderstruktur soll drastisch reduziert werden.

Ferner ist es Aufgabe der vorliegenden Erfindung, ein weiterentwickeltes Verfahren zum Herstellen einer 3D-Verbinderstruktur zur elektrischen Verbindung mindestens einer flächigen Elektrode mit mindestens einem Anschlussdraht anzugeben. Außerdem ist es Aufgabe der vorliegenden Erfindung, einen weiterentwickelten Temperatursensor anzugeben.

Erfindungsgemäß wird diese Aufgabe im Hinblick auf die 3D-Verbinderstruktur durch den Gegenstand des Anspruches 1, mit Blick auf das Verfahren zur Herstellung einer 3D-Verbinderstruktur durch den Gegenstand des Patentanspruches 12 und im Hinblick auf einen Temperatursensor durch den Gegenstand des Patentanspruches 17 gelöst.

Die Erfindung beruht auf dem Gedanken, eine 3D-Verbinderstruktur zur elektrischen Verbindung mindestens einer flächigen Elektrode mit mindestens einem Anschlussdraht anzugeben, wobei die 3D-Verbinderstruktur erfindungsgemäß mindestens zwei räumlich voneinander getrennte Verbinder aufweist, wobei die Verbinder jeweils ein elektrisch leitfähiges Material, eine erste Seite und eine zweite Seite aufweisen, wobei die zweite Seite eines jeden Verbinders mit einem elektronischen Anschlusselement verbunden oder verbindbar ist, wobei zwischen der ersten Seite und der zweiten Seite eines jeden Verbinders ein Abstand von mindestens 100 µm, insbesondere von mindestens 200 µm, insbesondere von mindestens 300 µm, ausgebildet ist.

Als eine 3D-Verbinderstruktur ist insbesondere eine derartige Verbinderstruktur anzusehen, die dreidimensional ausgebildet ist. Die Verbinderstruktur ist somit nicht nur flächig ausgebildet, wie dies im Sinne eines flachen Bandes oder eines flachen Bleches zu verstehen ist. Vielmehr weist die 3D-Verbinderstruktur in allen drei Richtungen, d.h. sowohl hinsichtlich der Länge und Breite, als auch hinsichtlich der Höhe entsprechende Dimensionierung auf.

Als eine 3D- bzw. dreidimensionale Verbinderstruktur ist insbesondere eine derartige Verbinderstruktur zu verstehen, die mehrere Verbinder aufweist. Die Verbinder können auch als Füßchen bzw. Kontaktierungsfüßchen bezeichnet werden. Die 3D-Verbinderstruktur umfasst somit mindestens zwei Verbinder, die räumlich voneinander getrennt sind. Jeder Verbinder weist eine erste Seite sowie eine zweite Seite auf. Bei diesen beiden Seiten handelt es sich vorzugsweise um die Seiten des Verbinders, die am weitesten voneinander beabstandet sind. Die erste Seite eines Verbinders kann als obere Seite bezeichnet werden. Die zweite Seite eines Verbinders kann als untere Seite eines Verbinders bezeichnet werden. Die Ausrichtungen hinsichtlich "oben" und "unten" sind insbesondere im kontaktierten Zustand ersichtlich. Dabei ist eine derartige Ausrichtung zu verstehen, wonach ein Substrat, das die mindestens eine flächige Elektrode aufweist, die zu kontaktieren ist, auf einer Ablagefläche horizontal abgelegt ist. Zwischen der ersten Seite und der zweiten Seite eines jeden Verbinders ist ein Abstand von mindestens 100 µm, insbesondere von mindestens 200 µm, insbesondere von mindestens 300 µm, ausgebildet. Der Abstand zwischen den beiden Seiten eines jeden Verbinders wird durch einen Materialauftrag zwischen den beiden Seiten bzw. durch eine Materialfüllung zwischen den beiden Seiten hergestellt. Der beschriebene Abstand zwischen den Verbindern soll insbesondere nicht als ein derartiger Abstand verstanden werden, der einem Luftabstand zwischen den beiden Seiten entspricht.

Mindestens ein Verbinder kann als Steg und/oder Säule und/oder Lamelle ausgebildet sein. Vorzugsweise sind alle Verbinder gleichartig ausgebildet. Des Weiteren ist es möglich, dass die Verbinder unterschiedlich ausgebildet sind und mehrere Ausbildungen von Verbindern, d.h. unterschiedliche Verbinder-Ausgestaltungen in einer erfindungsgemäßen 3D-Verbinderstruktur ausgebildet sind.

Bei dem elektrischen Anschlusselement kann es sich um die flächige Elektrode und/oder ein Anschlusspad und/oder einen Abschnitt der flächigen Elektrode handeln. Bei dem Anschlusspad handelt es sich vorzugsweise um ein derartiges Anschlusspad, das aus einer Sinterpaste gebildet ist. Vorzugsweise wird das Anschlusspad aus einer Sinterpaste mittels eines Siebdruckverfahrens hergestellt. Die Siebdruckpaste kann neben Edelmetall auch Glasfritte aufweisen. In einer möglichen Ausführungsform der Erfindung kann die 3D-Verbinderstruktur das elektrische Anschlusselement umfassen. Mit anderen Worten kann das elektrische Anschlusselement, insbesondere das Anschlusspad, als Teil der 3D-Verbinderstruktur ausgebildet sein.

In einer Ausführungsform der Erfindung ist es möglich, dass die ersten Seiten der Verbinder eine gemeinsame Ebene bilden und mit mindestens einer Brücke, die aus elektrisch leitfähigem Material besteht, und/oder dem Anschlussdraht verbunden sind.

Mit anderen Worten ist es möglich, dass die ersten Seiten der Verbinder direkt mit dem zu verbindenden Anschlussdraht verbunden sind. Alternativ ist es möglich, dass die ersten Seiten der Verbinder mit mindestens einer Brücke verbunden sind. Die Ausbildung einer Brücke hat den Vorteil, dass die 3D-Verbinderstruktur besonders einfach als separates Halbbauteil gehandhabt, insbesondere transportiert, und hergestellt werden kann.

Bei der Erfindung sind die mindestens zwei Verbinder als federnde Ausgleichselemente ausgebildet. Die federnden Ausgleichselemente wirken zwischen einem Anschlussdraht und der elektrisch zu verbindenden flächigen Elektrode. Dies ermöglicht es, dass einerseits eine Flexibilität zwischen dem mindestens einen Anschlussdraht mit der mindestens einen flächigen Elektrode gewährleistet wird und andererseits eine stabile mechanische Verbindung erzeugt wird.

Mit Hilfe der erfindungsgemäßen 3D-Verbinderstruktur gelingt es, einen relativ großen und zusammenhängenden Kontaktbereich zwischen einem Anschlussdraht und einer flächigen Elektrode herzustellen. Insbesondere die mittels eines Anschlusspads zur Verfügung gestellte Anschlussfläche kann aufgrund der erfindungsgemäßen 3D-Verbinderstruktur maximal ausgenutzt werden. Es wäre möglich, die Größe des Anschlusspads in Relation zu bislang bekannten Größen von Anschlusspads zu minimieren.

Bei dem elektrisch leitfähigen Material der Brücke handelt es sich insbesondere um eine Hochtemperaturlegierung, insbesondere um Alloy 601 (2.4851) und/oder Alloy 602 (2.4633) und/oder AluChrom (1.4767).

In einer bevorzugten Ausführungsform der Erfindung ist es möglich, dass die Verbinder und die Brücke einteilig, d.h. insbesondere einstückig und/oder monolithisch, ausgebildet sind. Es ist möglich, dass die Verbinder und die Brücke in einem einzigen Herstellungsschritt hergestellt werden.

Aufgrund der Ausbildung von mehreren, insbesondere länglichen, Verbindern und/oder der Ausbildung einer Brücke wird mit Hilfe der erfindungsgemäßen 3D-Verbinderstruktur die Gesamtstruktur eines herzustellenden Bauteils, insbesondere eines Temperatursensors, beim Verbinden des Anschlussdrahts mit dem Bauteil geschützt. Ein Substrat sowie eine darauf befindliche Elektrodenstruktur wird von einer beim Verbinden entstehenden Temperatureinwirkung (Schweißtemperatur) geschützt, da die Verbinder und/oder die Brücke einen entsprechenden Abstand zu dem Substrat/der Elektrodenstruktur bilden.

Die Brücke der 3D-Verbinderstruktur kann zur Verbindung mit dem Anschlussdraht einen Kontaktierungsbereich aufweisen, der vorzugsweise als Aufnahme zur Fixierung des mindestens einen Anschlussdrahtes ausgebildet ist. Die Aufnahme ist vorzugsweise als eine Rinne und/oder eine Hülse und/oder eine Nut ausgebildet. In eine derartige Aufnahme kann der mindestens eine Anschlussdraht eingelegt werden. Es kann zusätzlich eine stoffschlüssige und/oder formschlüssige Verbindung zwischen der Brücke und dem Anschlussdraht vorgesehen werden.

In einer weiteren Ausführungsform der Erfindung ist es möglich, dass die Brücke einen elektrisch leitfähigen Fortsatz aufweist, der über den Bereich der Verbinder hinausragt und einen Abschnitt zur Kontaktierung mit dem Anschlussdraht aufweist. Vorzugsweise umfasst, insbesondere besteht, der Fortsatz aus dem gleichen elektrisch leitenden Material wie die Brücke. Der Fortsatz kann in einem Verfahrensschritt zusammen mit der Brücke mittels additiver Fertigung hergestellt werden. Mit Hilfe eines derartigen Fortsatzes kann der Kontaktpunkt des mindestens einen Anschlussdrahtes in einen Bereich außerhalb des elektrischen Anschlusselements, insbesondere außerhalb des Anschlusspads, gelegt werden. Dies erleichtert eine spätere Kontaktierung des Bauteils.

Aufgrund der erfindungsgemäßen Ausbildung einer 3D-Verbinderstruktur mit mehreren räumlich voneinander getrennten Verbindern, sind die Verbinder mit einer flächigen Elektrode und/oder einem Anschlusspad lediglich in einem sehr kleinen Bereich, d.h. auf einer relativ kleinen Fläche miteinander verbunden. Zu diesem Zweck weist jeder Verbinder auf der zweiten Seite, mit anderen Worten auf der unteren Seite, eine Kontaktfläche zur Kontaktierung mit dem mindestens einen elektrischen Anschlusselement auf, wobei jede Kontaktfläche 100 µm² bis 0,5 mm², vorzugsweise 300 µm² bis 0,1 mm², insbesondere 1.000 µm² bis 50.000 µm², groß ist.

Je kleiner der Kontaktbereich, d.h. die Kontaktfläche der zweiten Seiten, jedes Verbinders ist, umso geringer ist die Wahrscheinlichkeit, dass bei Temperaturwechseln ein Bruch im Kontaktbereich zwischen der zweiten Seite des Verbinders und dem elektrischen Anschlusselement, auftritt. Dies gilt insbesondere in den Fällen, wenn die Materialien für das elektrische Anschlusselement und die Verbinder deutlich voneinander abweichende thermische Ausdehnungskoeffizienten aufweisen.

Das elektrisch leitfähige Material mindestens eines Verbinders weist vorzugsweise eine Hochtemperaturlegierung auf. Besonders bevorzugt weist das elektrisch leitfähige Material Alloy 601 (2.4851) und/oder Alloy 602 (2.4633) und/oder AluChrom (1.4767), auf.

Die mindestens eine flächige Elektrode und/oder das Anschlusspad weist vorzugsweise Edelmetall, insbesondere Platin, auf. Der Edelmetallanteil der flächigen Elektrode beträgt vorzugsweise mindestens 20 Gew%, insbesondere mindestens 40 Gew%, insbesondere mindestens 70 Gew%.

In einer weiteren Ausführungsform der Erfindung umfasst der mindestens eine Anschlussdraht eine Hochtemperaturlegierung, insbesondere Alloy 601 (2.4851) und/oder Alloy 602 (2.4633) und/oder AluChrom (1.4767).

Bei den verwendeten Materialien zur Herstellung mindestens eines Verbinders und/oder mindestens einer Brücke handelt es sich vorzugsweise um ein Metallpulver.

Geeignete Metallpulver sind beispielsweise Pulver aus einer Hochtemperaturlegierung gebildet, wie diese in nachfolgender Tabelle angegeben sind:

**Tabelle 1**

| **Werkstoffnummer** | **Name** | **max.Temp** | **Widerstand** | **Ausdehnung** | **Legierung** |
|---|---|---|---|---|---|
| | | It. Stahlschlüssel | 20°C Ω mm²/m | 100°C 10 E -6 /K | |
| | | | | | |
| 1.4767 | Katblech | 1200 | | | Cr21 Al5 Si1 Mn1 |
| | AluChrom | | | | |
| 1.4765 | | 1300 | | | Cr24 Al5 Si1 |
| | Kanthal D | | 1 | | Fe71 Cr22 Al5 Mn1 Si1 |
| 2.4869 | NiCr 8020 | 1200 | 1,12 | 15 bei 400°C | Ni75 Cr20 Si1 Mn1 Fe1 |
| 1.4571 | V4A | | 0,75 | 17 | Ni12Cr17Si1 Mn2Mo2 |
| 1.4841 | SS310 | 1150 | 0,9 | 17 bei 400°C | Cr25 Ni20 Si2 Mn2 |
| 1.4845 | TP 310 S | 1050 | 0,85 | 17 bei 400°C | Ni20Cr25Mn2 |
| 2.4816 | Inconel 600 | 1150 | 0,98 | 13 | Ni72 Cr16 Fe8 Mn1 |
| 2.4851 | alloy601HNicorfer 6023 H | 1200 | 1,19 | 14 | Ni60 Cr23 Fe18 Al2 Mn1 |
| 2.4633 | alloy 602 CA Nicrofer 6025 HT | 1200 | 1,19 | 12 | Ni62 Cr25 Fe10 Al2 |
| 2.4833 | alloy 602 MCA Nicrofer 6025 HT SO2 | 1200 | 1,25 | 14 | Ni62 Cr25 Fe10 Al2 |
| 2.4663 | Inconel 617 Nicrofer 5520 Co | | | | Ni54 Cr22 Co 13 Mo9 Al1 |
| 2.4951 | Nimonic | 1200 | | | Ni72 Cr20 Fe5 Si1 Mn1 |
| 2.4733 | Haynes230 | | | | Ni57 Cr22 W14 Co5 Fe3 Mo2 |
| | Nicrosil | | | | Ni84 Cr14 Si1,5 |

Der Durchmesser des Anschlussdrahts beträgt vorzugsweise 100 µm bis 800 µm, insbesondere 200 µm bis 500 µm, insbesondere 250 µm bis 350 µm.

Aufgrund der erfindungsgemäßen Ausbildung der 3D-Verbinderstruktur ist es möglich, dass gänzlich auf edelmetallhaltige Anschlussdrähte verzichtet werden kann. Dies gilt auch im Zusammenhang mit dem Material der erfindungsgemäßen 3D-Verbinderstruktur. Auch in diesem Zusammenhang ist es möglich, gänzlich auf Edelmetall-Materialien zu verzichten.

Ein weiterer Aspekt der Erfindung betrifft ein Verfahren zur Herstellung einer 3D-Verbinderstruktur zur elektrischen Verbindung mindestens einer flächigen Elektrode mit mindestens einem Anschlussdraht.

Das erfindungsgemäße Verfahren ist insbesondere zur Herstellung einer erfindungsgemäßen 3D-Verbinderstruktur geeignet.

Erfindungsgemäß ist es vorgesehen, dass mittels eines additiven Fertigungsverfahrens mindestens zwei räumlich voneinander getrennte Verbinder aus einem elektrisch leitfähigen Material hergestellt werden, wobei die Verbinder jeweils eine erste Seite und eine zweite Seite aufweisen und zwischen der ersten Seite und der zweiten Seite eines jeden Verbinders durch Materialauftrag ein Abstand von mindestens 100 µm, insbesondere von mindestens 200 µm, insbesondere von mindestens 300 µm, hergestellt wird.

Es ist möglich, dass die Verbinder während des Verfahrens zur Herstellung einer 3D-Verbinderstruktur auf einem elektrischen Anschlusselement aufgebracht werden.

Der erfindungsgemäß ausgebildete Abstand zwischen den beiden Seiten jeweils eines Verbinders wird folglich durch Materialauftrag hergestellt. Der Abstand zwischen den beiden Seiten entspricht somit der Materialdicke des Verbinders, die zwischen den beiden Seiten des Verbinders ausgebildet ist.

In einer besonders bevorzugten Ausführungsform der Erfindung handelt es sich bei dem additiven Fertigungsverfahren um ein 3D-Druckverfahren. Bei dem 3D-Druckverfahren soll es sich vorzugsweise um ein derartiges additives Fertigungsverfahren handeln, bei dem ein Material schichtweise als Pulver oder als Lösung aufgetragen wird und nach dem Auftrag mit energiereicher Strahlung lokal an den Stellen verbunden wird, an denen das zu fertigende Bauteil über entsprechend verfestigtes Material verfügen soll. Das Verbinden des Pulvers oder der Lösung kann über einen lokalen Aufschmelz-, Sinterungs- oder Vernetzungsprozess erfolgen. Die energiereiche Strahlung kann beispielsweise durch einen Laser, einen Elektronenstrahl oder über eine fokussierte UV-Strahlung aufgebracht werden. Aufgrund eines derartigen Herstellungsverfahrens ist es möglich, hinsichtlich der Materialien für den mindestens einen Anschlussdraht sowie für die flächige Elektrode, insbesondere für das Anschlusspad, unterschiedliche Materialkombinationen zu verwenden.

Aufgrund des erfindungsgemäßen Verfahrens ist es beispielsweise möglich, Hochtemperatur-Legierungen zur Herstellung der 3D-Verbinderstruktur zu verwenden, die weitaus kostengünstiger als Edelmetalle sind und des Weiteren bessere Eigenschaften hinsichtlich der Härte, der niedrigen thermischen Leitfähigkeit sowie der Bondbarkeit aufweisen.

Auf die ersten Seiten der Verbinder kann in einer weiteren Ausführungsform der Erfindung eine Brücke aus elektrisch leitfähigem Material aufgetragen werden. Dieses Auftragen bzw. Ausbilden der Brücke kann wiederum mittels eines additiven Fertigungsverfahrens erfolgen. Auf der Brücke wird insbesondere ein Kontaktierungsbereich, der zur Verbindung mit mindestens einem Anschlussdraht dient, ausgebildet werden. Der Kontaktierungsbereich kann wiederum eine Aufnahme, die vorzugsweise als eine Hülse und/oder eine Rinne und/oder eine Nut ausgebildet ist, aufweisen. Die Herstellung einer derartigen Aufnahme wird aufgrund des erfindungsgemäßen additiven Fertigungsverfahrens vereinfacht.

Der mindestens eine Anschlussdraht wird mit den ersten Seiten der Verbinder und/oder mit der Brücke verbunden. Vorzugsweise erfolgt dieses Verbinden mittels eines Laserschweißverfahrens.

Vorzugsweise werden die Verbinder direkt auf einem elektrischen Anschlusselement, insbesondere auf einem Anschlusspad, aufgebracht. Bei der erfindungsgemäßen Anwendung eines additiven Fertigungsverfahrens ist die Fertigungstemperatur, insbesondere eine Laserleistung, derart einzustellen, dass zum einen eine gute Verbindung der Pulverpartikel sowie eine gute Verbindung der Verbinder zum Anschlusspad hergestellt wird. Allerdings muss die Fertigungstemperatur, insbesondere die Laserleistung, derart eingestellt werden, dass das Material des elektrischen Anschlusselements, insbesondere das Sinterpastenmaterial des Anschlusspads, nicht beschädigt wird.

Die bei der Herstellung der Verbinder und/oder der Brücke verwendeten Pulver weisen vorzugsweise eine Korngrößenverteilung von bis zu 20 µm auf. Zum Versintern des Pulvermaterials wird vorzugsweise ein Laser mit einer Energie von beispielsweise 100 Watt eingesetzt. Der Laserfokus ist vorzugsweise kleiner als 20 µm.

Die Verbinder und/oder die Brücke werden/wird aus einem Pulver, das ein HochtemperaturLegierungsmaterial aufweist hergestellt. Insbesondere eignen sich Pulver wie Alloy 601 (2.4851) und/oder Alloy 602 (2.4633) und/oder AluChrom (1.4767). In diesem Zusammenhang wird des Weiteren nochmals auf die in Tabelle 1 angegebenen Materialien verwiesen.

Ein weiterer Aspekt der Erfindung betrifft einen Temperatursensor mit einer 3D-Verbinderstruktur. Bei der 3D-Verbinderstruktur handelt es sich um eine erfindungsgemäße 3D-Verbinderstruktur und/oder um eine erfindungsgemäß hergestellte 3D-Verbinderstruktur.

Es ergeben sich ähnliche Vorteile, wie diese bereits im Zusammenhang mit dem erfindungsgemäßen Verfahren zur Herstellung einer 3D-Verbinderstruktur und/oder mit der erfindungsgemäßen 3D-Verbinderstruktur angegeben sind.

Aufgrund der erfindungsgemäßen 3D-Verbinderstruktur zur elektrischen Verbindung mindestens einer flächigen Elektrode mit mindestens einem Anschlussdraht, wird eine Lösung bereitgestellt, mit der es möglich ist, Materialien mit unterschiedlichen Ausdehnungskoeffizienten dauerhaft miteinander zu verbinden. Aufgrund der Ausbildung mehrerer, insbesondere federnd ausgestalteter, Verbinder, die räumlich voneinander getrennt angeordnet sind, ist es möglich, elektrische Anschlusselemente, die beispielsweise aus Platin gefertigt sind und/oder Platin umfassen, mit Anschlussdrähten, die beispielsweise aus Nickel und/oder Edelstahl hergestellt sind, dauerhaft zu verbinden.

Die vorzugsweise federnde Eigenschaft der Verbinder ermöglicht es, auch bei hohen Temperaturen und schnellen Temperaturwechseln die Unterschiede im Ausdehnungsverhalten des elektronischen Anschlusselements und des Anschlussdrahtes zu kompensieren.

Nachfolgend wird die Erfindung anhand von Ausführungsbeispielen unter Bezug auf die beigefügten Zeichnungen näher erläutert.

In diesen zeigen:
- Fig. 2: eine 3D-Verbinderstruktur im bereits kontaktierten Zustand gemäß einer ersten erfindungsgemäßen Ausführungsform;
- Fig. 3: eine 3D-Verbinderstruktur im bereits kontaktierten Zustand gemäß einer zweiten erfindungsgemäßen Ausführungsform der Erfindung;
- Fig. 4: eine 3D-Verbinderstruktur im bereits kontaktierten Zustand gemäß einer dritten Ausführungsform der Erfindung;
- Fig. 5a-5c: eine Detaildarstellung einer erfindungsgemäßen 3D-Verbinderstruktur in verschiedenen Ansichten;
- Fig. 6a-6c: verschiedene Ausführungsformen hinsichtlich der Ausbildung der Verbinder von erfindungsgemäßen 3D-Verbinderstrukturen;
- Fig. 7a und 7b: eine erste mögliche Ausführungsform einer Aufnahme einer Brücke einer erfindungsgemäßen 3D-Verbinderstruktur;
- Fig. 8a und 8b: eine zweite Ausführungsform einer Aufnahme einer Brücke einer erfindungsgemäßen 3D-Verbinderstruktur; und
- Fig. 9a und 9b: eine dritte Ausführungsform einer Aufnahme einer Brücke einer erfindungsgemäßen 3D-Verbinderstruktur.

Für gleiche und gleichwirkende Bauteile werden im Folgenden die gleichen Bezugsziffern verwendet.

In Fig. 2 ist eine erste mögliche Ausführungsform hinsichtlich einer erfindungsgemäßen 3D-Verbinderstruktur 10 dargestellt. Die 3D-Verbinderstruktur 10 dient zur elektrischen Verbindung einer flächigen Elektrode 15 mit einem Anschlussdraht 16. Die flächige Elektrode 15 ist dabei insbesondere als Platindünnschichtstruktur ausgebildet, die mäanderförmig ist. Die Platindünnschichtstruktur bzw. die flächige Elektrode 15 befindet sich auf einer oberen Seite 18 eines Substrats 19, insbesondere eines Keramiksubstrats.

Auf der flächigen Elektrode 15 ist ein Anschlusspad 25 ausgebildet. Im dargestellten Beispiel dient das Anschlusspad 25 als elektrisches Anschlusselement 30.

Die 3D-Verbinderstruktur 10 umfasst mindestens zwei Verbinder 20. Im dargestellten Ausführungsbeispiel umfasst die 3D-Verbinderstruktur 10 sechs Verbinder 20. Diese Verbinder 20 sind räumlich voneinander getrennt und sind aus einem elektrisch leitfähigem Material hergestellt. Alle Verbinder 20 weisen eine erste Seite 21 sowie eine zweite Seite 22 auf. Bei der ersten Seite 21 handelt es sich mit anderen Worten um die obere Seite. Bei der zweiten Seite 22 handelt es sich mit anderen Worten um die untere Seite jedes Verbinders 20. Die ersten Seiten 21 der Verbinder 20 sind gemäß Ausführungsbeispiel der Fig. 2 mit dem Anschlussdraht 16 verbunden. Die zweiten Seiten 22 sind hingegen mit dem Anschlusspad 25 verbunden.

Zwischen der ersten Seite 21 und der zweiten Seite 22 eines jeden Verbinders 20 ist ein Abstand A von mindestens 100 µm, insbesondere von mindestens 200 µm, insbesondere von mindestens 300 µm, ausgebildet. Der Abstand A entspricht bei den dargestellten Verbindern 20 mit anderen Worten der Höhe der Verbinder 20. Die Verbinder 20 sind an ihren ersten Seiten 21 mit dem Anschlussdraht 16 verbunden. Die Verbinder 20 sind hier einzeln mit dem Anschlussdraht 16 mittels Schmelzschweißen, insbesondere mittels Laserschweißen, verbunden. Diesbezüglich sind die Schweißpunkte 35 dargestellt.

Die flächige Elektrode 15 weist Edelmetall, insbesondere Platin, auf, wobei der Anteil an Edelmetall der flächigen Elektrode 15 größer als 20 Gew% ist. Das Anschlusspad 25 weist Edelmetall, insbesondere Platin, auf, wobei der Anteil an Edelmetall des Anschlusspads 25 größer als 20 Gew% ist. Das Anschlusspad 25 hat im dargestellten Beispiel eine Fläche von 1,0 mm x 0,5 mm.

Der Anschlussdraht 16 weist wiederum eine Hochtemperaturlegierung auf. Des Weiteren ist es möglich, dass der Anschlussdraht 16 aus Nickel oder Edelstahl besteht und einen Durchmesser von 100 µm bis 800 µm, typischerweise von 300 µm, aufweist.

Die Verbinder 20 werden im dargestellten Beispiel mittels eines additiven Fertigungsverfahrens, insbesondere mittels eines 3D-Drucks, direkt auf dem Anschlusspad 25 aufgebaut. Als Pulver dient bei der additiven Fertigung bzw. bei dem 3D-Druck ein Pulver aus einer metallischen Hochtemperaturlegierung. Insbesondere wird ein Pulver aus Alloy 601 (2.4851) und/oder Alloy 602 (2.4633) und/oder AluChrom (1.4767) verwendet. Die Pulver weisen vorzugsweise eine Korngrößenverteilung bis zu 20 µm auf. Zum Versintern des Pulvermaterials wird vorzugsweise ein Laser mit einer Energie von beispielsweise 100 Watt eingesetzt, wobei der Laserfokus kleiner als 20 µm ist.

Die Verbinder 20 sind im dargestellten Ausführungsbeispiel als Stege ausgebildet. Die Höhe der Verbinder 20 beträgt im vorliegenden Beispiel 500 µm. Die Verbinder weisen außerdem vorzugsweise eine Breite von 500 µm und eine Länge von 40 µm auf. Die Breite und Länge bilden wiederum jeweils die Fläche der ersten Seite 21 und/oder zweite Seite 22. Vorzugsweise weisen die Verbinder 20 einen Abstand zueinander von 20 µm auf.

Der Anschlussdraht 16 ist senkrecht zu den die Höhen der Verbinder 20 bildenden Seiten angeordnet und kontaktiert die ersten Seiten 21 der Verbinder 20 annähernd mittig.

Das Anschlusspad 25 ist vorzugsweise aus einer platinhaltigen Sinterpaste gebildet.

In Fig. 3 ist eine alternative Ausführungsform einer 3D-Verbinderstruktur 10 dargestellt. Die 3D-Verbinderstruktur 10 weist eine Brücke 40 auf. Die ersten Seiten 21 der Verbinder 20 bilden hierbei eine gemeinsame Ebene E und sind mit dieser Brücke 40 an dieser gemeinsamen Ebene E verbunden. Die Brücke 40 ist ebenfalls aus elektrisch leitfähigem Material hergestellt. Vorzugsweise ist die Brücke 40 aus dem gleichen Material wie die Verbinder 20 hergestellt.

In einer besonders bevorzugten Ausführungsform der Erfindung sind die Verbinder 20 und die Brücke 40 einteilig ausgebildet. Die Brücke 40 weist eine erste Seite 41 sowie eine zweite Seite 42 auf. Die Verbinder 20 sind an der ersten Seite 21 der Verbinder an der zweiten Seite 42 der Brücke 40 angebracht bzw. an dieser zweiten Seite 42 mit der Brücke 40 verbunden. An der ersten Seite 41, die einer oberen Seite einer Brücke 40 entspricht, ist hingegen der Anschlussdraht 16 angebracht. Im dargelegten Ausführungsbeispiel ist die Brücke 40 an der ersten Seite 41 mittels eines Schweißpunktes 45 mit dem Anschlussdraht 16 verbunden.

In einer besonders bevorzugten Ausführungsform der Erfindung wird die Brücke 40 zusammen mit den Verbindern 20 in einem Arbeitsgang mittels eines additiven Fertigungsverfahrens hergestellt.

Die Brücke 40 überdeckt im dargestellten Ausführungsbeispiel die Verbinder 20, wobei die Brücke eine Höhe von ca. 300 µm aufweist. Das Verbinden des Anschlussdrahtes 16 mittels des Schweißpunktes 45 erfolgt vorzugsweise mittels eines Laserschweißverfahrens. Hierzu weist die Brücke 40 einen Kontaktierungsbereich 43 auf.

Die übrigen Elemente und Bauteile entsprechen dem Ausführungsbeispiel gemäß Fig. 2, so dass auf diese nicht nochmals separat eingegangen wird.

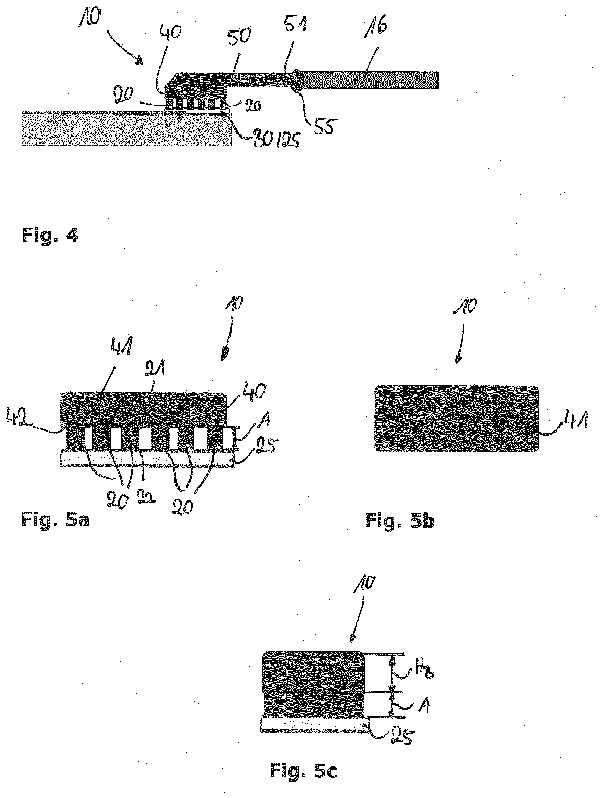

In Fig. 4 wird eine weitere Ausführungsform einer 3D-Verbinderstruktur 10 dargestellt, die ebenfalls eine Brücke 40 aufweist. Die Brücke 40 und die Verbinder 20 sind wiederum aus dem gleichen Material gefertigt. Die Brücke 40 weist einen elektrisch leitfähigen Fortsatz 50 auf, der über den Bereich der Verbinder 20 hinausragt. Der Fortsatz 50 weist außerdem einen Abschnitt 51 zur Kontaktierung mit dem Anschlussdraht 16 auf. In Fig. 4 ist der Abschnitt 51 zur Kontaktierung mit dem Anschlussdraht 16 als Stirnseite ausgebildet. An dieser Stirnseite bzw. dem Abschnitt 51 ist der Fortsatz 50 und somit die 3D-Verbinderstruktur 10 mittels eines Schweißpunktes 55 mit dem Anschlussdraht 16 verbunden. Auch in diesem Zusammenhang kann das Verbinden mittels eines Laserschweißverfahrens erfolgen.

Der Fortsatz 50 dient insbesondere dazu, die Verbindung der 3D-Verbinderstruktur 10 mit dem Anschlussdraht 16 in einem Bereich außerhalb, d.h. nicht in direkter vertikaler Verlängerung zum Anschlusspad 25, auszubilden. Der Fortsatz 50 wird vorzugsweise in einem Arbeitsgang zusammen mit der Brücke 40 und vorzugsweise in einem Arbeitsgang zusammen mit den Verbindern 20 hergestellt. Dies erleichtert das spätere Kontaktieren im Zusammenhang mit dem Substrat 19.

In den Fig. 5a bis 5c ist eine mögliche 3D-Verbinderstruktur 10 vergrößert dargestellt. Fig. 5a zeigt dabei eine seitliche Ansicht der erfindungsgemäßen 3D-Verbinderstruktur 10. In Fig. 5b wird eine Draufsicht dargestellt. Fig. 5c ist wiederum eine gedrehte Seitenansicht der Fig. 5a.

Es ist zu erkennen, dass die 3D-Verbinderstruktur 10 sechs Verbinder 20 mit jeweils ersten Seiten 21 und zweiten Seiten 22 aufweist. Die ersten Seiten 21 der Verbinder 20 sind mit einer zweiten Seite 42 einer Brücke 40 verbunden. Die zweiten Seiten 22 der Verbinder 20 sind wiederum mit dem Anschlusspad 25 verbunden. Wie Fig. 5b verdeutlicht, ist die Brücke 40 auf der ersten Seite 41 rechteckig ausgebildet.

Dies betrifft auch die Erstreckung bezüglich der Höhe H_{B} der Brücke. Die Höhe H_{B} der Brücke entspricht in etwa der Höhe des Verbinders 20 und somit dem Abstand A zwischen der ersten Seite 21 und der zweiten Seite 22 des Verbinders 20.

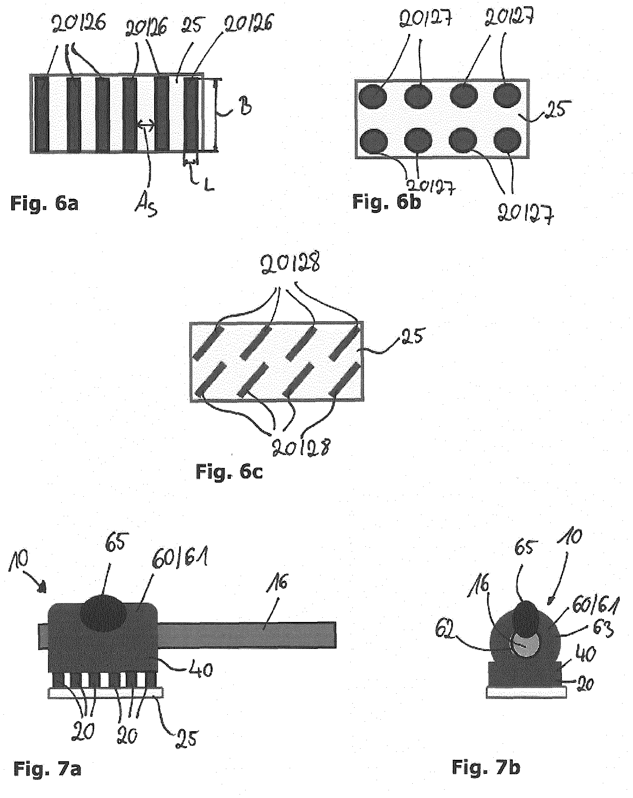

In den Fig. 6a-6c sind verschiedene Ausgestaltungsformen der Verbinder 20 in einer Draufsicht dargestellt. Demnach wird die Grundfläche der Verbinder 20 dargestellt. Die Grundfläche kann dabei der Form der ersten Seite 21 und/oder der zweiten Seite 22 des Verbinders 20 entsprechen. In Fig. 6a sind die Verbinder 20 insbesondere als Stege 26 dargestellt. Die Stege 26 sind insbesondere derart ausgebildet, dass die Breiten B der Stege 26 ein größeres Maß als die Längen L der Stege 26 aufweisen. Die Breiten B der Stege 26 entsprechen ferner der Breite der Anschlusspads 25. Die Längen L der Stege 26 entsprechen in etwa dem Abstand A_{S} zwischen den Stegen 26. Der Abstand A_{S} kann auch geringer oder größer als die Länge L der Stege 26 sein.

In Fig. 6b werden Verbinder 20 dargestellt, die als Säulen 27 ausgebildet sind. Die Säulen 27 weisen in diesem Ausführungsbeispiel jeweils einen runden Querschnitt auf. Es ist auch möglich, dass die Säulen 27 einen quadratischen Querschnitt aufweisen. Im dargestellten Ausführungsbeispiel weist die 3D-Verbinderstruktur 10 acht Verbinder 20 in Form von Säulen 27 auf.

In Fig. 6c ist eine weitere Ausführungsform hinsichtlich möglicher Verbinder 20 dargestellt. Die Verbinder 20 sind als Lamellen 28 ausgebildet. Diese Lamellen 28 sind in Relation zum Anschlusspad 25 schräg angeordnet. Es sind acht Verbinder 20 in Form von Lamellen 28 ausgebildet. Die Materialstärke bzw. Materialdicke der Verbinder 20, 26, 27 und 28 beträgt vorzugsweise 100 µm.

Der Querschnitt der Verbinder 20, der jeweils parallel zur flächigen Elektrode bzw. zum Anschlusspad 25 orientiert ist, muss nicht konstant sein. Der Querschnitt kann sich ausgehend von der ersten Seite 21 zur zweiten Seite 22 ändern. Es ist sowohl eine Verjüngung als auch eine Verbreiterung der Querschnittsfläche möglich. Unter einer mittleren Querschnittsfläche des Verbinders parallel zur flächigen Elektrode bzw. zum Anschlusspad 25 ist das arithmetische Mittel aller Querschnittsflächen zu verstehen, die äquidistant von der zweiten Seite zu der ersten Seite des jeweiligen Verbinders 20 angeordnet sind.

In den Fig. 7a-9b sind unterschiedliche Ausführungsformen und Ansichten hinsichtlich der Ausgestaltung von Brücken 40 und den zugehörigen Aufnahmen 60 dargestellt.

In der Ausführungsform gemäß Fig. 7a und 7b, wobei 7b eine seitliche Ansicht der Fig. 7a darstellt, weist die Brücke 40 eine Aufnahme 60 in Form einer Hülse 61 auf. Die Hülse 61 weist einen derartigen Innendurchmesser auf, dass der Anschlussdraht 16 in die Hülse 61 eingeführt werden kann. Der Querschnitt der Ausnehmung 62 der Hülse 61 kann dabei kreisrund ausgebildet sein, so dass ein in der Regel kreisrunder Draht, nämlich ein Anschlussdraht 16, in die Hülse 61, d.h. in die Ausnehmung 62 eingeführt werden kann. Durch die Hülse 61, d.h. durch die Wandung 63, wird der Anschlussdraht 16 mit der Aufnahme 60/61 verschweißt. Es wird wiederum ein Schweißpunkt 65 gebildet. Das Verschweißen des Anschlussdrahtes 16 mit der Brücke 40 ist somit vereinfacht. Außerdem ist die mechanische Stabilität des Schweißpunktes 65 bzw. der Schweißnaht erhöht.

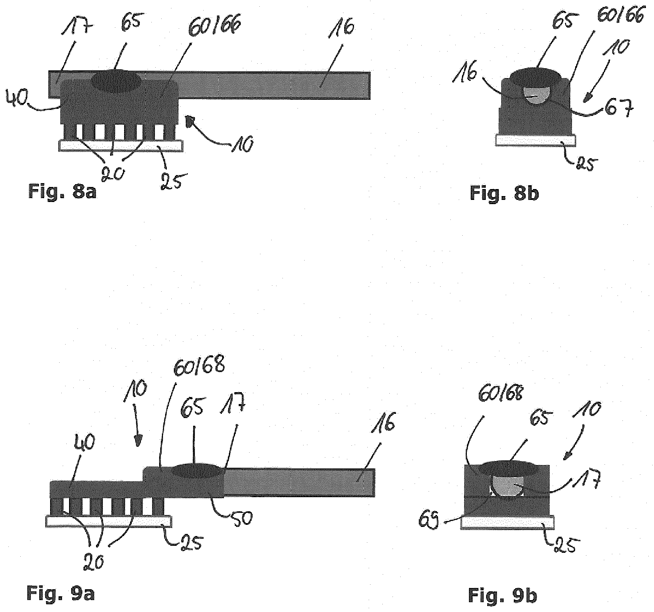

Die Brücke 40 gemäß den Ausführungsbeispielen der Fig. 8a und 8b weist ebenfalls eine Aufnahme 60 auf. In diesem Fall ist die Aufnahme 60 als Rinne 66 ausgestaltet. Der Anschlussdraht 16 wird in die Rinne 66 gelegt. Die Rinne 66 weist eine U-förmige bzw. halbrunde Ausnehmung 67 auf. Nachdem der Anschlussdraht 16 in die Rinne 66 eingeführt bzw. eingelegt ist, kann wiederum ein Verbinden des Anschlussdrahtes 16 mit der Brücke 40 aufgrund der Aufnahme 60 erfolgen. Es wird eine Schweißnaht bzw. ein Schweißpunkt 65 ausgebildet. Der Schweißpunkt 65 deckt den Anschlussdraht 16 und somit die Rinne 66 ab.

In den Fig. 9a und 9b ist wiederum eine Aufnahme 60 einer Brücke 40 dargestellt. Die Aufnahme 60 ist in dem dargestellten Beispiel im Bereich eines Fortsatzes 50 ausgebildet. Die Aufnahme 60 ist als Nut 68 ausgestaltet. Die Ausnehmung 69 der Aufnahme 60/68 weist einen quadratischen oder rechteckigen Querschnitt auf. In die Nut 68 kann wiederum der Anschlussdraht 16 eingelegt werden. Insbesondere wird ein Ende 17 des Anschlussdrahtes 16 in die Nut 68 eingelegt. In dieser Konfiguration kann anschließend die Verbindung des Anschlussdrahtes 16 mit der Brücke 40 bzw. mit der Aufnahme 60/68 erfolgen. Auch diesbezüglich wird eine Schweißnaht/ein Schweißpunkt 65 zur Fixierung des Anschlussdrahtes ausgebildet.

Die Nut 68 bzw. die Ausnehmung 69 kann des Weiteren derart ausgestaltet sein, dass ein mechanisches Verklemmen des Anschlussdrahtes 16 bzw. des Endes 17 des Anschlussdrahtes 16 mit der Brücke 40 erfolgt.

Der erfindungsgemäße Temperatursensor wird in einer bevorzugten Ausführungsform der Erfindung in einem Abgasstrang eines Verbrennungsmotors verwendet.

Die in den Fig. 2-9b dargestellten Details hinsichtlich einer erfindungsgemäßen 3D-Verbinderstruktur 10 können in sämtlich möglichen Kombinationen miteinander verwirklicht werden.

### Bezugszeichenliste

- 1: Keramiksubstrat (Stand der Technik)
- 2: Platindünnschichtstruktur (Stand der Technik)
- 3: Siebdruckpaste (Stand der Technik)
- 4: Anschlussdraht (Stand der Technik)
- 5, 6: Schweißpunkt (Stand der Technik)
- 7: Drahtverlängerung (Stand der Technik)
- 10: 3D-Verbinderstruktur
- 15: flächige Elektrode
- 16: Anschlussdraht
- 17: Ende Anschlussdraht
- 18: obere Seite Substrat
- 19: Substrat
- 20: Verbinder
- 21: erste Seite Verbinder
- 22: zweite Seite Verbinder
- 25: Anschlusspad
- 26: Steg
- 27: Säule
- 28: Lamelle
- 30: elektrisches Anschlusselement
- 35: Schweißpunkt
- 40: Brücke
- 41: erste Seite Brücke
- 42: zweite Seite Brücke
- 43: Kontaktierungsbereich der Brücke
- 45: Schweißpunkt
- 50: Fortsatz
- 51: Abschnitt
- 55: Schweißpunkt
- 60: Aufnahme
- 61: Hülse
- 62: Ausnehmung
- 63: Wandung
- 65: Schweißpunkt
- 66: Rinne
- 67: Ausnehmung Rinne
- 68: Nut
- 69: Ausnehmung Nut
- A: Abstand erste Seite zur zweiten Seite
- A_{S}: Abstand zwischen Stegen
- E: gemeinsame Ebene
- H_{B}: Höhe Brücke
- B: Breite Steg
- L: Länge Steg

## Patentansprüche

1. 3D-Verbinderstruktur (10) zur elektrischen Verbindung mindestens einer flächigen Elektrode (15) mit mindestens einem Anschlussdraht (16),
**dadurch gekennzeichnet, dass**
die 3D-Verbinderstruktur (10) mindestens zwei räumlich voneinander getrennte Verbinder (20) aufweist, wobei die Verbinder (20) jeweils ein elektrisch leitfähiges Material, eine erste Seite (21) und eine zweite Seite (22) aufweisen, wobei die zweite Seite (22) eines jeden Verbinders (20) mit einem elektrischen Anschlusselement (30) verbunden oder verbindbar ist, wobei zwischen der ersten Seite (21) und der zweiten Seite (22) eines jeden Verbinders (20) ein Abstand (A) von mindestens 100 µm, insbesondere von mindestens 200 µm, insbesondere von mindestens 300 µm, ausgebildet ist.

2. 3D-Verbinderstruktur (10) nach Anspruch 1,
**dadurch gekennzeichnet, dass**
mindestens ein Verbinder (20) als Steg (26) und/oder Säule (27) und/oder Lamelle (28) ausgebildet ist.

3. 3D-Verbinderstruktur (10) nach Anspruch 1 oder 2,
**dadurch gekennzeichnet, dass**
das elektrische Anschlusselement (30) die flächige Elektrode (15) und/oder ein Anschlusspad (25), das vorzugsweise aus einer Sinterpaste gebildet ist, ist.

4. 3D-Verbinderstruktur (10) nach einem der Ansprüche 1 bis 3,
**dadurch gekennzeichnet, dass**
die ersten Seiten (21) der Verbinder (20) eine gemeinsame Ebene (E) bilden und mit mindestens einer Brücke (40), die aus elektrisch leifähigem Material besteht, und/oder dem Anschlussdraht (16) verbunden sind.

5. 3D-Verbinderstruktur (10) nach Anspruch 4,
**dadurch gekennzeichnet, dass**
die Verbinder (20) und die Brücke (40) einteilig ausgebildet sind.

6. 3D-Verbinderstruktur (10) nach Anspruch 4 oder 5,
**dadurch gekennzeichnet, dass**
die Brücke (40) zur Verbindung mit dem Anschlussdraht (16) einen Kontaktierungsbereich (43, 51) aufweist, der vorzugsweise als Aufnahme (60) zur Fixierung des Anschlussdrahts (16) ausgebildet ist, wobei die Aufnahme (60) vorzugsweise als eine Rinne (66) und/oder eine Hülse (61) und/oder eine Nut (68) ausgebildet ist.

7. 3D-Verbinderstruktur (10) nach einem der Ansprüche 4 bis 6,
**dadurch gekennzeichnet, dass**
die Brücke (40) einen elektrisch leitfähigen Fortsatz (50) aufweist, der über den Bereich der Verbinder (20) hinausragt und einen Abschnitt (51) zur Kontaktierung mit dem Anschlussdraht (16) aufweist.

8. 3D-Verbinderstruktur (10) nach einem der vorhergehenden Ansprüche,
**dadurch gekennzeichnet, dass**
jeder Verbinder (20) auf der zweiten Seite (22) eine Kontaktfläche zur Kontaktierung mit dem mindestens einen elektrischen Anschlusselement (30) aufweist, wobei jede Kontaktfläche 100 µm² bis 0,5 mm², insbesondere 300 µm² bis 0,1 mm², insbesondere 1.000 µm² bis 50.000 µm², groß ist.

9. 3D-Verbinderstruktur (10) nach einem der vorhergehenden Ansprüche,
**dadurch gekennzeichnet, dass**
das elektrisch leitfähige Material mindestens eines Verbinders (20) eine Hochtemperaturlegierung, insbesondere Alloy 601 (2.4851) und/oder Alloy 602 (2.4633) und/oder AluChrom (1.4767), aufweist.

10. 3D-Verbinderstruktur (10) nach einem der vorhergehenden Ansprüche,
**dadurch gekennzeichnet, dass**
die mindestens eine flächige Elektrode (15) und/oder das Anschlusspad (25) Edelmetall, insbesondere Platin, aufweist, wobei der Edelmetallanteil der flächigen Elektrode (15) vorzugsweise mindestens 20 Gew%, insbesondere mindestens 40 Gew%, insbesondere mindestens 70 Gew%, beträgt.

11. 3D-Verbinderstruktur (10) nach einem der vorhergehenden Ansprüche,
**dadurch gekennzeichnet, dass**
der mindestens eine Anschlussdraht (16) eine Hochtemperaturlegierung, insbesondere Alloy 601 (2.4851) und/oder Alloy 602 (2.4633) und/oder AluChrom (1.4767), umfasst, wobei der Durchmesser des Anschlussdrahts (16) vorzugsweise 100 µm bis 800 µm, insbesondere 200 µm bis 500 µm, insbesondere 250 µm bis 350 µm, beträgt.

12. Verfahren zur Herstellung einer 3D-Verbinderstruktur (10) zur elektrischen Verbindung mindestens einer flächigen Elektrode (15) mit mindestens einem Anschlussdraht (16), insbesondere zur Herstellung einer 3D-Verbinderstruktur (10) nach einem der Ansprüche 1 bis 11,
**dadurch gekennzeichnet, dass**
mittels eines additiven Fertigungsverfahrens mindestens zwei räumlich voneinander getrennte Verbinder (20) aus einem elektrisch leitfähigem Material hergestellt werden, wobei die Verbinder (20) jeweils eine erste Seite (21) und eine zweite Seite (22) aufweisen und zwischen der ersten Seite (21) und der zweiten Seite (22) eines jeden Verbinders (20) durch Materialauftrag ein Abstand (A) von mindestens 100 µm, insbesondere von mindestens 200 µm, insbesondere von mindestens 300 µm, hergestellt wird.

13. Verfahren nach Anspruch 12,
**dadurch gekennzeichnet, dass**
die Verbinder (20) auf einem elektrischen Anschlusselement (30) aufgebracht werden.

14. Verfahren nach Anspruch 12 oder 13,
**dadurch gekennzeichnet, dass**
mittels eines additiven Fertigungsverfahrens auf die ersten Seiten (21) der Verbinder (20) eine Brücke (40) aus elektrisch leitfähigem Material aufgetragen wird, wobei ein Kontaktierungsbereich (43, 51), der zur Verbindung mit dem Anschlussdraht (16) dient, ausgebildet wird.

15. Verfahren nach einem der Ansprüche 12 bis 14,
**dadurch gekennzeichnet, dass**
der Anschlussdraht (16) mit den ersten Seiten (21) der Verbinder (20) und/oder mit der Brücke (40), vorzugsweise mittels Laserschweißens, verbunden wird.

16. Verfahren nach einem der Ansprüche 12 bis 15,
**dadurch gekennzeichnet, dass**
die Verbinder (20) und/oder die Brücke (40) aus einem Pulver, das ein Hochtemperaturlegierungsmaterial, insbesondere Alloy 601 (2.4851) und/oder Alloy 602 (2.4633) und/oder AluChrom (1.4767), aufweist, hergestellt werden/wird.

17. Temperatursensor, aufweisend eine 3D-Verbinderstruktur (10) nach einem der Ansprüche 1 bis 11 und/oder hergestellt nach einem Verfahren nach einem der Ansprüche 12 bis 16.
